# EUROPEAN PATENT APPLICATION

(11) **EP 4 527 668 A1**
(43) Date of publication of application: **26.03.2025**
(21) Application number: 22947312.9
(22) Date of filing: 23.06.2022
(51) Int. Cl.: B60L 15/20

(54) **CONTROL SYSTEM AND TERMINAL DEVICE**

(71) Applicant: Shenzhen Yinwang Intelligent Technologies Co., Ltd., Shenzhen, Guangdong 518129 (CN)
(72) Inventor: WU, Zeliang, Shenzhen, Guangdong 518129 (CN); WANG, Xingwu, Shenzhen, Guangdong 518129 (CN); XIE, Zhengsheng, Shenzhen, Guangdong 518129 (CN); PENG, Xu, Shenzhen, Guangdong 518129 (CN); YAN, Limin, Shenzhen, Guangdong 518129 (CN)
(74) Representative: Gill Jennings & Every LLP
(86) International application number: PCT/CN2022/100679
(87) International publication number: WO 2023/245540

(57) **Abstract**

A control system and a terminal device are provided, to resolve a problem of low reliability of a control system in the conventional technology and may be used in fields such as manual driving, self-driving, intelligent driving, assisted driving, or connected vehicles. The control system includes a first controller and a second controller. The first controller is connected to a first sensor, and the second controller is connected to the first sensor. The first controller is configured to obtain first opening information that is of an accelerator pedal and that is detected by the first sensor. The first opening information is used by the first controller to determine a control signal. The first controller or the second controller is configured to send at least one control signal to an actuator. The at least one control signal is used to control the actuator to perform corresponding processing. The two controllers are configured to control the actuator to perform corresponding processing, so that reliability of the control system can be improved. For example, one controller may serve as a backup of the other controller. When one controller is faulty, the other controller may take over the faulty controller for continuous control.

## Description

### TECHNICAL FIELD

This application relates to the field of control technologies, and in particular, to a control system and a terminal device.

### BACKGROUND

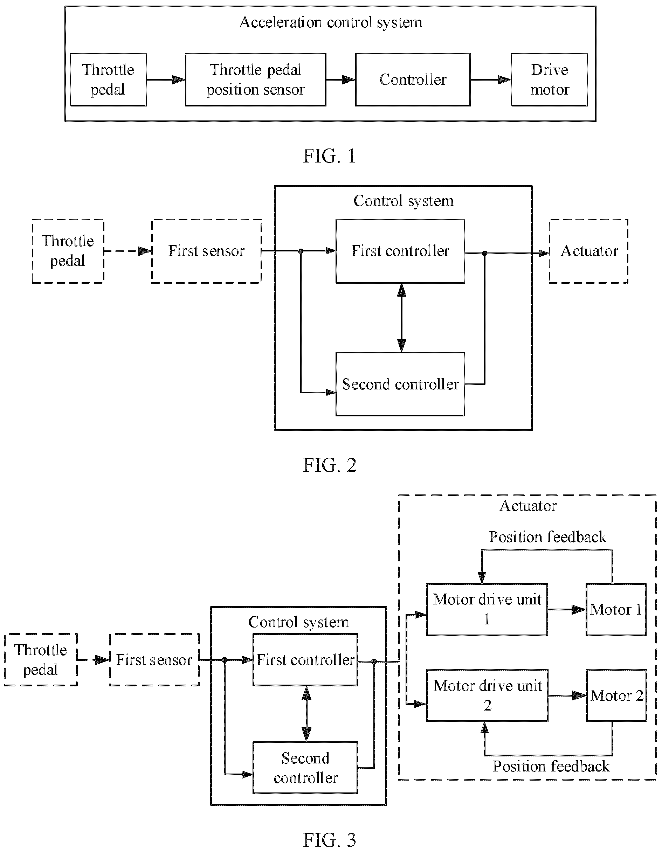

A control system is one of important systems for vehicles (such as a new energy vehicle and a fossil fuel-powered vehicle) to travel normally. An acceleration control system of the fossil fuel-powered vehicle is used as an example. As shown in FIG. 1, the acceleration control system mainly includes a throttle pedal, a throttle pedal position sensor (or referred to as a pedal displacement sensor), a controller, a drive motor, and the like. When a driver depresses the throttle pedal, the throttle pedal position sensor can detect position information of the throttle pedal, and transmit the position information of the throttle pedal to the controller through a cable or the like. The controller performs processing such as an operation on the position information of the throttle pedal and information transmitted by another associated system, to obtain a control signal, and then sends the control signal to the drive motor. The drive motor controls an intake air volume of a throttle based on the received control signal. The throttle is a controllable valve that is configured to control flow of air into an engine. After the air enters an inlet pipe, the air is mixed with gasoline to form a flammable gas.

However, if the controller in the acceleration control system has an error in a processing process such as an operation, or the controller fails (or is faulty), the acceleration control system cannot output an accurate control signal, or the controller cannot control the drive motor, causing a large safety risk to traveling of the vehicle.

In conclusion, how to improve reliability of the control system is a technical problem that urgently needs to be resolved currently.

### SUMMARY

This application provides a control system and a terminal device, to improve reliability of the control system.

According to a first aspect, this application provides a control system. The control system includes a first controller and a second controller. The first controller is connected to a first sensor, and the second controller is connected to the first sensor. The first controller is configured to obtain first opening information that is of an accelerator pedal and that is detected by the first sensor. The first opening information is used by the first controller to determine a control signal. The first controller or the second controller is configured to send at least one control signal to an actuator, to control the actuator to perform corresponding processing. For example, the first controller sends a first control signal to the actuator, and the first control signal is used to control the actuator to perform corresponding processing; or the second controller sends a second control signal to the actuator, and the second control signal is used to control the actuator to perform corresponding processing.

Based on the foregoing solution, the first controller and the second controller control the actuator to perform corresponding processing, so that reliability of the control system can be improved. For example, one controller may serve as a backup of the other controller. When one controller is faulty, the other controller may take over the faulty controller for continuous control. For another example, one controller may serve as a check of the other controller. Reliability of a control signal output by the control system can be improved through the check.

Based on functions of the first controller and the second controller, the following describes three possible cases as examples.

Case 1: The second controller serves as a backup of the first controller.

In a possible implementation, the second controller is configured to: receive a second indication signal from the first controller; or when a heartbeat signal is not received from the first controller within first preset duration, obtain a second control signal based on second opening information that is of the accelerator pedal and that is detected by the first sensor, and send the second control signal to the actuator. The second indication signal indicates that at least one function of the first controller fails.

When the at least one function of the first controller fails (or is faulty), the second controller may generate the second control signal based on the second opening information obtained from the first sensor, to control the actuator to perform corresponding processing. That is, the second controller may take over the first controller to continue working. This helps improve a safety level of manual driving and may further improve reliability of the control system.

Further, optionally, if the first controller is further configured to supply power to the first sensor, the at least one failed function does not include a power supplying function of the first controller.

The first controller supplies power to the first sensor, and no additional power supplying module (or device) needs to be added.

For example, the first controller includes a first power supply, and the first power supply is configured to supply power to the first sensor. Further, the first power supply may be, for example, a first low dropout regulator (low-dropout regulator, LDO).

By using the first LDO, the first controller may provide a stable direct current voltage for the first sensor. In addition, the LDO can work under a small difference between an output voltage and an input voltage. This helps improve precision of detecting the opening information (for example, the first opening information or the second opening information) of the first sensor.

Case 2: The second controller serves as a check of the first controller.

In a possible implementation, the second controller is further configured to: obtain second opening information that is of the accelerator pedal and that is detected by the first sensor; determine second data based on the second opening information; and send the second data to the first controller. The first controller is further configured to: determine first data based on the first opening information obtained from the first sensor; and if the first data is consistent with the second data, obtain a first control signal based on the first opening information, and send the first control signal to the actuator.

Checking consistency between the first data and the second data through the first controller helps reduce or avoid generation of an incorrect first control signal by the first controller, thereby helping improve reliability and stability of the first control signal output by the first controller and further improving reliability of the control system.

Case 3: Functions of the first controller and the second controller are independent.

In a possible implementation, the second controller is further connected to a second sensor. The second controller can implement self-driving by obtaining surrounding environment information detected by the second sensor.

Further, the second controller is configured to: obtain surrounding environment information detected by the second sensor; obtain a third control signal based on the surrounding environment information; and send the third control signal to the actuator, to control the actuator to perform corresponding processing. Alternatively, the first controller is configured to: obtain a first control signal based on the first opening information that is of the accelerator pedal and that is detected by the first sensor; and send the first control signal to the actuator, to control the actuator to perform corresponding processing.

The first controller can implement manual driving by obtaining the first opening information from the first sensor. Alternatively, the second controller can implement self-driving by obtaining the detected surrounding environment information from the second sensor. It may also be understood that the first controller may be used for manual driving, and the second controller may be used for self-driving. When the first controller is faulty, the second controller may also be used to implement self-driving. When the second controller is faulty, the first controller may also be used to implement manual driving.

**In** another possible implementation, the second controller is further configured to: when determining that the second sensor fails, obtain a fourth control signal based on second opening information that is of the accelerator pedal and that is detected by the first sensor, and send the fourth control signal to the actuator.

When the second controller cannot implement self-driving because the second sensor fails, the second controller may switch to manual driving, and obtain the second opening information from the first sensor, thereby helping improve a safety level of manual driving.

Based on the foregoing three possible cases, both the first controller and the second controller need to be connected to the first sensor. Based on this, the following separately describes a structure of the first control, a structure of the second controller, and a connection relationship between the first controller, the second controller, and the first sensor.

**In** a possible implementation, the second controller includes a differential amplifier circuit and a second control unit. The second control unit is connected to the first sensor through the differential amplifier circuit.

By using the differential amplifier circuit, a problem in which the first opening information and the second opening information obtained from the first sensor by the first controller and the second controller are inaccurate due to a terrain difference can be resolved. In other words, the second controller can accurately obtain the second opening information of the first sensor by using the differential amplifier circuit.

Further, optionally, the first sensor includes a signal output end and a ground end. The differential amplifier circuit includes a first input end, a second input end, and a first output end. The first input end of the differential amplifier circuit is connected to the signal output end of the first sensor. The second input end of the differential amplifier circuit is connected to the ground end of the first sensor. The first output end of the differential amplifier circuit is connected to the second control unit.

The first input end of the differential amplifier circuit is connected to the signal output end of the first sensor, and the second input end of the differential amplifier circuit is connected to the ground end of the first sensor. Therefore, the second opening information that is of the accelerator pedal and that is detected by the first sensor can be obtained by using a signal output by the first output end of the differential amplifier circuit. In addition, the signal output by the first output end of the differential amplifier circuit depends on a voltage difference between the first input end and the second input end of the differential amplifier circuit, and is irrelevant to a ground end of the second controller. Therefore, impact, on acquired first opening information and second opening information, of a dynamic terrain difference between the first controller and the second controller can be eliminated based on the differential amplifier circuit.

For example, the differential amplifier circuit includes a first resistor, a second resistor, a third resistor, a fourth resistor, and a first operational amplifier. The first resistor is connected between the signal output end of the first sensor and a positive electrode of the first operational amplifier. The second resistor is connected between the ground end of the first sensor and a negative electrode of the first operational amplifier. The third resistor is bridged between the negative electrode of the first operational amplifier and an output end of the first operational amplifier. The fourth resistor is connected between the positive electrode of the first operational amplifier and a ground end of the second controller.

A structure of the differential amplifier circuit is simple, which helps simplify a design of the control system.

**In** a possible implementation, the second controller includes a second power supply. The second power supply is configured to supply power to the differential amplifier circuit.

Supplying power to the differential amplifier circuit by using the second power supply included in the second controller can ensure a consistency between a grounding potential of the differential amplifier circuit and a grounding potential of the second controller.

**In** a possible implementation, the second controller further includes a voltage follower. The differential amplifier circuit is connected to the first sensor through the voltage follower.

The voltage follower has features of high input impedance (for example, several megaohms) and low output impedance (for example, several ohms). Therefore, the voltage follower may play a buffering and isolation role for the first sensor, thereby helping improve a capability of the first sensor to carry a load, and further helping improve accuracy of the second opening information obtained by the second controller from the first sensor.

For example, the voltage follower includes a second output end, a second operational amplifier, a fifth resistor, a sixth resistor, and a first capacitor. The second output end of the voltage follower is connected to the first input end of the differential amplifier circuit. The fifth resistor is connected between the signal output end of the first sensor and a positive electrode of the second operational amplifier. The sixth resistor is bridged between a negative electrode of the second operational amplifier and an output end of the second operational amplifier. The first capacitor is connected between the ground end of the first sensor and the positive electrode of the second operational amplifier.

Further, optionally, the first power supply included in the first controller supplies power to the voltage follower.

Supplying power to the voltage follower by using the first power supply included in the first controller can ensure a consistency between a potential of a ground end of the voltage follower and a potential of a ground end of the first controller. No additional potential difference is caused.

In a possible implementation, the first controller includes a first control unit. An analog-to-digital converter of the first control unit is connected to the signal output end of the first sensor. A ground end of the first control unit is connected to the ground end of the first sensor.

By connecting an acquisition circuit of the first control unit to the signal output end of the first sensor, the first controller can obtain the first opening information detected by the first sensor. By connecting the ground end of the first control unit to the ground end of the first sensor, a potential of the ground end of the first control unit may be the same as a potential of the ground end of the first sensor, so that the first control unit can accurately acquire the first opening information detected by the first sensor.

According to a second aspect, this application provides a terminal device. The terminal device includes a first sensor and the control system in the first aspect or any one of the first aspect. The first sensor is configured to detect first opening information of an accelerator pedal.

For technical effects that can be achieved in any one of the second aspect to the seventh aspect, refer to descriptions of beneficial effects in the first aspect. Details are not described herein again.

Further, optionally, the terminal device may further include a second sensor. The second sensor is configured to detect surrounding environment information.

The terminal device can implement self-driving by using the surrounding environment information detected by the second sensor.

Further, optionally, the terminal device further includes a vehicle frame, and the control system is fastened to the vehicle frame.

A vehicle may separately provide a reference potential for the first controller and the second controller in the control system.

### BRIEF DESCRIPTION OF DRAWINGS

FIG. 1 is a diagram of an architecture of a control system in the conventional technology;
FIG. 2 is a diagram of an architecture of a control system according to this application;
FIG. 3 is a diagram of an architecture of another control system according to this application;
FIG. 4 is a diagram of a structure of a first controller according to this application;
FIG. 5a is a diagram of a structure of a first sensor according to this application;
FIG. 5b is a diagram of a structure of another first sensor according to this application;
FIG. 6 is a diagram of a connection relationship between a first controller and a first sensor according to this application;
FIG. 7 is a diagram of an architecture of another control system according to this application;
FIG. 8a is a diagram of a connection relationship between a differential amplifier circuit and a first sensor according to this application;
FIG. 8b is a diagram of another connection relationship between a differential amplifier circuit and a first sensor according to this application;
FIG. 9 is a diagram of another connection relationship between a differential amplifier circuit and a first sensor according to this application;
FIG. 10 is a diagram of a connection between a voltage follower, a differential amplifier circuit, and a first sensor according to this application;
FIG. 11 is a diagram of a structure of a second controller according to this application;
FIG. 12 is a diagram of an architecture of another control system according to this application;
FIG. 13 is a diagram of an architecture of another control system according to this application;
FIG. 14 is a diagram of a structure of a terminal device according to this application; and
FIG. 15 is an example of a block diagram of functions of a vehicle according to this application.

### DESCRIPTION OF EMBODIMENTS

The following describes in detail embodiments of this application with reference to the accompanying drawings.

The following describes some terms in this application. It should be noted that these explanations are intended to facilitate understanding by a person skilled in the art, but do not constitute a limitation on the protection scope claimed in this application.

### 1. Operational amplifier

The operational amplifier ("opamp" for short) is a circuit unit with a high amplification factor. An output signal of the operational amplifier may be a result of a mathematical operation like addition, subtraction, differentiation, or integration performed on an input signal. The operational amplifier has input ports (which are "+" and "-" respectively), an output port, a positive power supply, and a negative power supply.

When an input signal is input to the amplifier through the "-" port, an output signal at the output end is in a reverse phase with the input signal. When an input signal is input to the amplifier through the "+" port, an output signal at the output end is in a same phase as the input signal. When signals are input through both of the two input ports, the operational amplifier implements the subtraction operation, and an output signal is in a same phase as the larger one.

### 2. Differential amplifier circuit

The differential amplifier circuit may also be referred to as a differential operational amplifier circuit. An output voltage changes only when voltages at two input ends of the circuit are different.

### 3. Impedance

In a circuit that has a resistor, an inductor, and a capacitor, blocking on a current in the circuit is referred to as impedance. Blocking of the capacitor on an alternating current in the circuit is referred to as capacitive reactance. Blocking of the inductor on an alternating current in the circuit is referred to as inductive reactance. Blocking of the capacitor and the inductor on an alternating current in the circuit is collectively referred to as impedance. A unit of impedance is an ohm.

### 4. LDO

An LDO is also referred to a low dropout linear regulator or a low dropout regulator. The LDO is a linear direct current voltage regulator that can provide a power supply with a stable direct current voltage.

### 4. Opening information

The opening information may represent information about an angle at which an accelerator pedal is depressed.

The foregoing describes some terms used in this application, and the following describes possible application scenarios of this application.

In a possible application scenario, a control system in this application may be integrated into a transportation means. The transportation means includes but is not limited to a vehicle. The vehicle may be, for example, an unmanned vehicle, a smart vehicle, an electric vehicle, or a digital vehicle. Specifically, the control system may be an accelerator pedal control system, a brake pedal control system, a steering control system, a manual gear control system, or the like in the vehicle. The accelerator pedal control system may be configured to control a speed of the vehicle. The brake pedal control system is configured to control the vehicle to decelerate or stop, and the brake pedal control system may use friction or a current to slow down rotation of a wheel. The steering control system may control a forward or backward direction of the vehicle. In some embodiments, the steering control system may be referred to as a steering wheel control system. The foregoing application scenario may be applied to fields such as unmanned driving, self-driving, assisted driving, intelligent driving, or connected vehicles.

It should be noted that the foregoing application scenario is merely an example. The control system provided in this application may be further applied to another possible scenario, and is not limited to the foregoing example scenario.

Based on the foregoing content, the following specifically describes the control system provided in this application with reference to the accompanying drawings.

FIG. 2 is a diagram of an architecture of a control system according to this application. The control system includes a first controller and a second controller. The first controller is connected to a first sensor, and the second controller is connected to the first sensor. The first controller is configured to obtain first opening information that is of an accelerator pedal and that is detected by the first sensor. The first opening information is used by the first controller to determine a control signal. Specifically, the first sensor is configured to: detect the first opening information of the accelerator pedal; convert the detected first opening information into an electrical signal; and send, to the first controller, the electrical signal that represents the first opening information of the accelerator pedal. The first controller or the second controller is configured to send at least one control signal to an actuator, where the at least one control signal is used to control the actuator to perform corresponding processing. For example, the first controller sends a first control signal to the actuator, and the first control signal is used to control the actuator to perform corresponding processing; or the second controller sends a second control signal to the actuator, and the second control signal is used to control the actuator to perform corresponding processing.

In a possible implementation, the actuator may include, for example, a motor drive unit and a motor (or a solenoid valve). Specifically, the motor drive unit drives, based on the received control signal (for example, the first control signal or the second control signal), the motor (or the solenoid valve) to operate, to perform corresponding processing. For example, the motor drive unit drives the solenoid valve to adjust an intake air volume of a throttle. It should be understood that the actuator may be any component that can implement a corresponding function based on a control signal output by the control system. This is not limited in this application. Further, optionally, the first controller and the actuator may communicate with each other through a controller area network (controller area network, CAN) bus or an input/output (input/output, I/O) hardwire; and/or the second controller and the actuator may also communicate with each other by using the CAN bus or the I/O hardwire.

There may be one or more motor drive units, and there may also be one or more motors (or solenoid valves). When there are a plurality of motor drive units, different motor drive units may separately control different motors. With reference to FIG. 3, the actuator includes a motor drive unit 1, a motor drive unit 2, a motor 1, and a motor 2. The motor drive unit 1 drives the motor 1 to operate, and the motor drive unit 2 drives the motor 2 to operate.

Based on the foregoing control system, the first controller and the second controller control the actuator to perform corresponding processing, so that reliability of the control system can be improved. For example, one controller may serve as a backup of the other controller. When one controller is faulty, the other controller may take over the faulty controller for continuous control. For another example, one controller may serve as a check of the other controller. Reliability of a control signal output by the control system can be improved through the check.

Based on functions of the first controller and the second controller, the following describes three possible cases as examples.

Case 1: The second controller serves as a backup of the first controller.

In a possible implementation, the first controller is used for manual driving, and the second controller is also used for manual driving. Based on this, the first controller is connected to the first sensor, and the second controller is connected to the first sensor.

The following describes an example of a trigger condition in which the second controller serves as a backup of the first controller.

Condition 1: The second controller receives a second indication signal from the first controller, and the second indication signal indicates that at least one function of the first controller fails. Specifically, the second controller may receive the second indication signal from the first controller through the CAN bus, the Ethernet (Ethemet), or the like. A specific form of the second indication signal may be any form pre-agreed on by the first controller and the second controller. This is not limited in this application.

In a possible implementation, the first controller is further configured to supply power to the first sensor, and the at least one failed function indicated by the second indication signal does not include a power supplying function. It may also be understood that, when a function other than the function of supplying power to the first sensor fails, the first controller sends the second indication signal to the second controller. Correspondingly, the second controller receives the second indication signal from the first controller, and the second controller takes over the function of the first controller, to control the actuator to perform a corresponding function. For specific descriptions of a structure and functions of the first controller, refer to the following detailed descriptions of the first controller. Details are not described herein.

In another possible implementation, the first controller does not need to supply power to the first sensor, and the at least one failed function indicated by the second indication signal may be any function of the first controller.

Condition 2: The second controller does not receive a heartbeat signal of the first controller within first preset duration.

In a possible implementation, when the second controller does not receive the heartbeat signal of the first controller within the first preset duration, it may be determined that the first controller is faulty. In this case, the second controller needs to serve as a backup of the first controller to take over a function of the first controller, to control the actuator to perform corresponding processing. Specifically, the first controller may send the heartbeat signal to the second controller through the CAN bus, the Ethernet (Ethernet), or the like.

Based on Case 1, when the at least one function of the first controller fails (or is faulty), the second controller may generate the second control signal based on second opening information obtained from the first sensor, to control the actuator to perform corresponding processing. This helps improve a safety level of manual driving and may further improve reliability of the control system.

Case 2: The second controller serves as a check of the first controller.

In a possible implementation, the first controller is used for manual driving, and the second controller is also used for manual driving. Based on this, the first controller is connected to the first sensor, and the second controller is connected to the first sensor. Further, the second controller is configured to: obtain second opening information from the first sensor; determine second data based on the second opening information; and send the second data to the first controller. Specifically, the second controller may send the second data to the first controller through the Ethernet, the CAN bus, or the like. The first controller is configured to: obtain first opening information from the first sensor; and determine first data based on the first opening information. If it is determined that the first data is consistent with the second data, the first controller obtains a first control signal based on the first opening information, and sends the first control signal to the actuator, to control the actuator to perform corresponding processing. The first data and the second data may be, for example, torque of a motor or a size of a through hole of a solenoid valve. It should be noted that, that the first controller determines that the first data is consistent with the second data may be that the first data is completely the same as the second data, or may be that a difference between the first data and the second data is within an allowed error range.

Checking consistency between the first data and the second data through the first controller helps reduce or avoid generation of an incorrect first control signal by the first controller, thereby helping improve reliability and stability of the first control signal output by the first controller, and further improving reliability of the control system. In this way, manual driving of a higher safety level can be implemented.

It should be noted that, in Case 2, consistency between the first data and the second data may alternatively be checked by the second controller. In other words, when both the first controller and the second controller are used for manual driving, one of the first controller and the second controller may serve as a primary controller, and the other one serves as a secondary controller. The controller serving as the primary controller checks the first data and the second data, and controls the actuator to perform corresponding processing. A specific controller that serves as the primary controller may be preset. This is not limited in this application.

Case 3: Functions of the first controller and the second controller are independent.

Case 3 may be further divided into the following two possible cases.

Case 3.1: The first controller is used for manual driving, and the second controller is used for self-driving.

In a possible implementation, the first controller is connected to the first sensor, and the second controller is connected to a second sensor. The first controller is connected to the first sensor, so that the first controller can be used for manual driving. The second controller is connected to the second sensor, so that the second controller can be used for self-driving.

The second sensor may include, for example, but is not limited to a millimeter wave radar and/or a lidar and/or a vision apparatus. The vision apparatus may include, for example, but is not limited to, a camera. The camera may be a static camera or a video camera. This is not limited in this application. The millimeter wave radar may use a radio signal to sense a target in a surrounding environment. In some embodiments, in addition to sensing the target, the millimeter wave radar may be further configured to sense a speed and/or a forward direction of the target. The lidar may use a laser to sense a target in a surrounding environment. The vision apparatus may use a target recognition algorithm, a structure from motion (structure from motion, SFM) algorithm, a video tracking technology, and other vision technologies. In some embodiments, the camera may be configured to capture a plurality of images of a surrounding environment, and may process and analyze the captured images to identify a target and/or a feature in the surrounding environment. The target and/or the feature may include a traffic signal, a road boundary, and an obstacle. The vision apparatus may also be configured to draw a map for an environment, track a target, estimate a speed of the target, and the like.

In a possible implementation, the first controller is configured to: obtain the first opening information from the first sensor; obtain a first control signal based on the first opening information; and send the first control signal to the actuator. Specifically, the first controller may output the first control signal to the actuator through the CAN bus or the I/O hardwire, to control the actuator to perform corresponding processing, to implement manual driving.

Alternatively, the second controller is configured to: obtain surrounding environment information from the second sensor; obtain a third control signal based on the surrounding environment information; and send the third control signal to the actuator, to control the actuator to perform corresponding processing, to implement self-driving. The surrounding environment information includes but is not limited to association information of the target in the surrounding environment. The target may be, for example, a traffic signal, a road boundary, or an obstacle. The association information of the target may include but is not limited to distance information of the target, an orientation of the target, and/or a speed of the target. Further, when determining the third control signal, the second controller may further obtain the second control signal in combination of information (for example, a braking or driving requirement (namely, an acceleration or deceleration requirement)) input by another system (for example, an advanced driving assistance system (advanced driver assistance system, ADAS)).

In actual application, a specific to-be-used driving mode may be selected in advance. For example, self-driving and manual driving can be displayed on a vehicle-mounted display, and a driver can select one of the driving modes in advance. It should be understood that self-driving and manual driving may alternatively be presented to the driver in another possible manner, to facilitate selection by the driver. This is not limited in this application.

Case 3.2: The first controller is used for manual driving, and the second controller switches from self-driving to manual driving.

Based on this, the first controller is connected to the first sensor, the second controller is connected to the first sensor, and the second controller is connected to a second sensor. The first controller is connected to the first sensor, so that the first controller can be used for manual driving. The second sensor is connected, so that the second controller can be used for self-driving. The second controller is connected to the first sensor, so that the second controller can be used for manual driving.

The following describes an example of a possible trigger condition in which the second controller switches from self-driving to manual driving.

In a possible implementation, when the second sensor cannot detect the surrounding environment information due to impact of an external environment (for example, extremely bad weather), the second sensor sends a third indication signal to the second controller. The third indication signal indicates that the second sensor cannot detect the surrounding environment information. Correspondingly, after receiving the third indication signal from the second sensor, the second controller may determine that the second sensor fails.

In another possible implementation, when the second controller does not receive information from the second sensor within second preset duration, the second controller may determine that the second sensor fails.

It should be noted that the foregoing trigger condition in which the second controller switches from self-driving to manual driving is merely an example. There may be another possible trigger condition. For example, a driver automatically switches a driving mode to manual driving for the second controller. This is not limited in this application.

Further, optionally, if the second controller determines that the second sensor fails, it indicates that the second controller cannot implement self-driving, and may exit self-driving and switch to manual driving. Specifically, after the second controller switches to manual driving, the second controller is configured to: obtain second opening information detected by the first sensor; obtain a fourth control signal based on the second opening information; and send the fourth control signal to the actuator, to control the actuator to perform corresponding processing, so that the second controller implements manual driving. Alternatively, the first sensor sends detected second opening information to the second controller in real time. After the second controller switches to manual driving, the second controller obtains a fourth control signal based on the second opening information, and sends the fourth control signal to the actuator, to control the actuator to perform corresponding processing, so that the second controller implements manual driving.

Based on Case 3.2, when determining that the second sensor fails, the second controller may generate the fourth control signal based on the second opening information obtained from the first sensor, to control the actuator to perform corresponding processing. In this way, the second controller can exit self-driving and switch to manual driving. This helps improve a safety level of manual driving.

It should be noted that the second opening information may be the same as or different from the first opening information. For example, for Case 1 and Case 3.2, time at which the second controller obtains the second opening information from the first sensor is different from time at which the first controller obtains the first opening information from the first sensor, and the first opening information may be different from the second opening information. For Case 2, the second opening information obtained by the second controller from the first sensor is the same as the first opening information obtained by the first controller from the first sensor.

Based on the foregoing content, the following separately describes a structure of the first control, a structure of the second controller, and a connection relationship between the first controller, the second controller, and the first sensor.

### 1. First controller

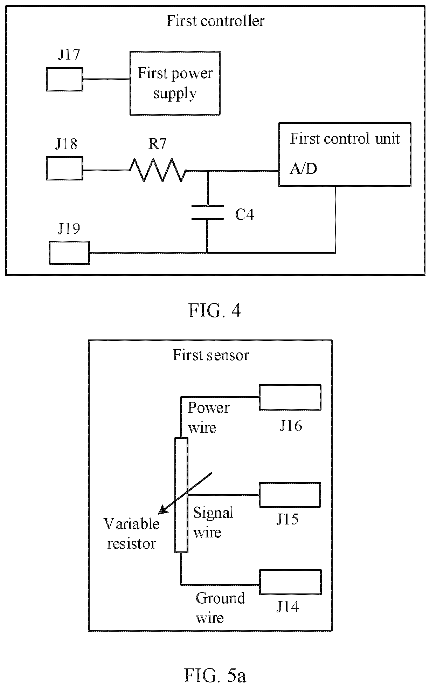

FIG. 4 is a diagram of the structure of the first controller according to this application. In this example, the first controller may include a first control unit. The first control unit includes an analog-to-digital converter (analog-to-digital converter, A/D). Further, the first controller includes a first power supply, and an RC circuit (or an RC oscillator) that includes a resistor R7 and a capacitor C4. The first control unit is configured to collect, through the A/D, the first opening information detected by the first sensor. For example, the first control unit converts, through the A/D, an output voltage (analog) of 0 to 5 volts (V) into a decimal number (digital) like 0 to 256 (the A/D reads 8 bits) or 0 to 1024 (the A/D reads 10 bits). Then, the decimal number obtained through changing is restored to the first opening information of the accelerator pedal according to an algorithm. The first power supply is configured to supply power to the first sensor. The first power supply may be, for example, a first LDO. The first LDO may provide a 5 V voltage for the first sensor. The RC circuit is configured to filter out interference of a high level signal caused by a cable between the first sensor and the differential amplifier circuit.

The first control unit may include, for example, but is not limited to, a microcontroller unit (microcontroller unit, MCU) (or referred to as a single-chip microcomputer), a central processing unit (central processing unit, CPU), a microprocessor, a graphics processing unit (graphics processing unit, GPU) (which may be understood as a microprocessor), a digital signal processor (digital signal processor, DSP), or the like. In another implementation, the processor may implement a specific function by using a logical relationship of a hardware circuit. The logical relationship of the hardware circuit is fixed or reconfigurable. For example, the processor is a hardware circuit implemented by using an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). For example, the processor may altematively be an application processor (application processor, AP), an image signal processor (image signal processor, ISP), another programmable logic device, a transistor logic device, a hardware component, or any combination thereof.

In a possible implementation, the first controller may provide at least three ports (or referred to as pins or stitches) for the first sensor, which are a port J17, a port J18, and a port J19 respectively. The first controller is connected to the first sensor through the three ports. Before a manner of connecting the first controller to the first sensor is described, a structure of the first sensor is described.

FIG. 5a is a diagram of the structure of the first sensor according to this application. In this example, the first sensor includes a variable resistor, and a power wire, a signal wire, and a ground wire that are connected to the variable resistor. Grounding is to ensure that the first sensor has a stable reference potential. Specifically, the first sensor is configured to detect the opening information of the accelerator pedal. Therefore, the first sensor may also be referred to as a position sensor. When a position of the accelerator pedal changes, the position sensor may detect opening information of the accelerator pedal, and convert the opening information into an electrical signal. For example, the accelerator pedal may be connected to a brush of the variable resistor of the first sensor through a rotating shaft. When the position of the accelerator pedal changes, a voltage between the brush and a ground end of the first sensor changes, and the voltage change may represent the opening information of the accelerator pedal.

Further, the first sensor may provide at least three ports for the control system, which are a signal output end J15, a ground end J14, and a power supply connection end J16 respectively. The first sensor may be connected to the first controller and the second controller through the three ports.

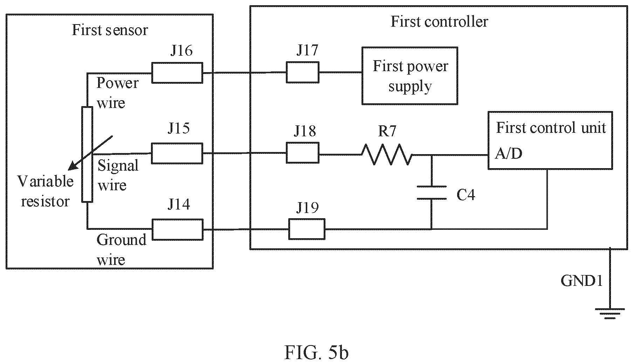

FIG. 5b is a diagram of a connection relationship between the first controller and the first sensor according to this application. The A/D of the first control unit of the first controller is connected to the signal output end J15 of the first sensor through the port J18, so that the first controller obtains the first opening information from the first sensor. The port J19 of the first control unit is connected to the ground end J14 of the first sensor, so that the first sensor and the first controller have a same reference potential. The first power supply of the first control unit is connected to the power supply connection end J16 of the first sensor through the port J17, so that the first controller supplies power to the first sensor.

To prevent the first sensor from failing to detect the opening information of the accelerator pedal in a timely manner due to a fault, the first sensor may use a redundancy design. The redundancy design means that some key components or functions are repeatedly set in consideration of security, reliability, and other aspects. When some of the components are faulty, the redundantly set components may serve as standby components to intervene and take over functions of the faulty components in a timely manner, so that the fault time can be reduced.

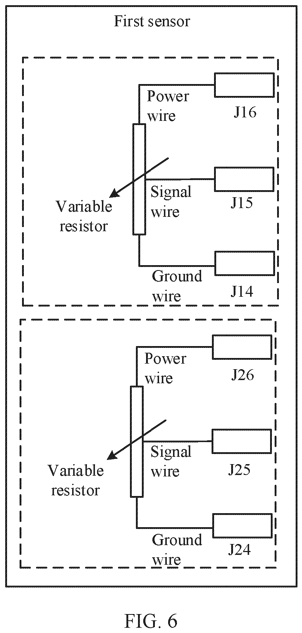

FIG. 6 is a diagram of a structure of another first sensor according to this application. The first sensor uses a redundancy design. Specifically, the first sensor provides at least six ports for the control system, which are a signal output end J15, a ground end J14, a power supply connection end J16, a signal output end J25, a ground end J24, and a power supply connection end J26. The signal output end J15, the ground end J14, and the power supply connection end J16 form one group. The signal output end J25, the ground end J24, and the power supply connection end J26 form the other group. The signal output end J15 and the signal output end J25 are a redundancy-design group, and have a same function and connection relationship. The ground end J14 and the ground end J24 are a redundancy-design group, and have a same function and connection relationship. The power supply connection end J16 and the power supply connection end J26 are a redundancy-design group, and have a same function and connection relationship. For related descriptions of the signal output end J15 (or the signal output end J25), the ground end J14 (or the ground end J24), and the power supply connection end J16 (or the power supply connection end J26), refer to the foregoing descriptions of FIG. 5a. Details are not described herein again.

### 2. Second controller

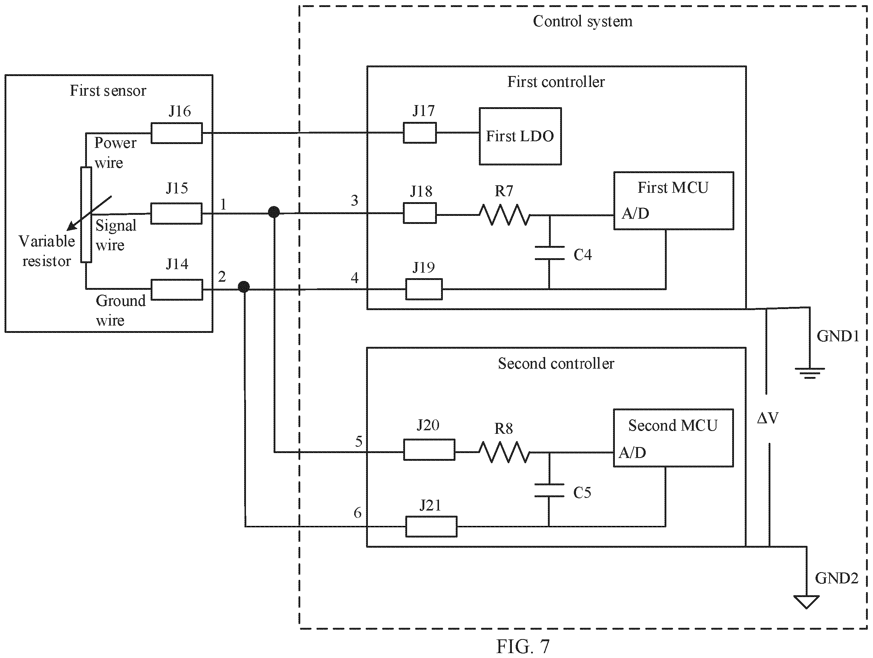

For Case 3, the structure of the second controller may be the same as the structure of the first controller, or the structure of the second controller may not include a power supply compared with the structure of the first controller. With reference to FIG. 7, an example in which the first power supply is a first LDO is used, an example in which the first control unit is a first MCU is used, and an example in which the second control unit is a second MCU is used. For a structure and functions of the second controller, refer to the foregoing descriptions of the first controller. Details are not described herein again.

For Case 1 and Case 2, if the control system shown in FIG. 7 is used, a potential difference ΔV exists between a potential of a ground end (ground, GND) 1 of the first controller and a potential of a ground end GND2 of the second controller. If the signal output end of the first sensor is directly connected to the first controller and the second controller separately, when the first controller and the second controller operate at the same time, it is equivalent to that the ground end GND1 of the first controller and the ground end GND2 of the second controller are directly short-circuited. As a result, a dynamic voltage difference ΔV exists between the ground end GND1 of the first controller and the ground end GND2 of the second controller. The dynamic voltage difference ΔV drives a ground loop of the first sensor, and most of voltage drop falls on a ground wire with low impedance. As a result, voltages between V₁₂, V₃₄, and V₅₆ are different. Consequently, the first controller and the second controller cannot accurately obtain the opening information detected by the first sensor.

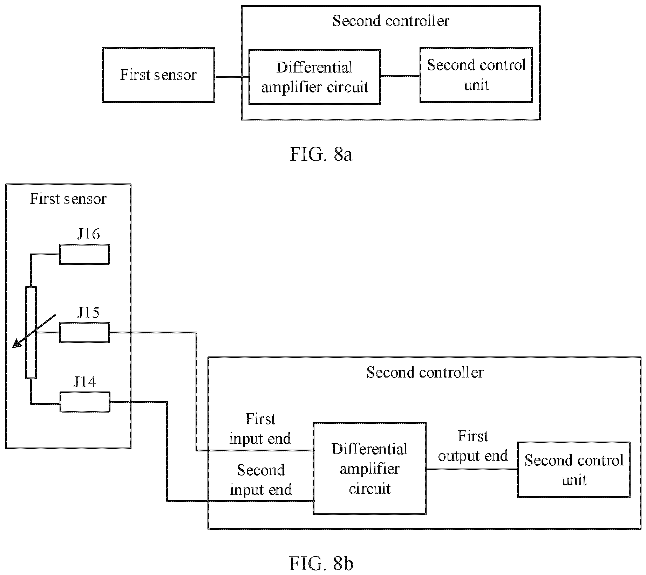

To resolve a problem in which the first opening information obtained by the first controller and the second opening information obtained by the second controller are inaccurate due to a terrain difference between the first controller and the second controller, a differential amplifier circuit can be added to the second controller. Specifically, the second controller includes the second control unit and the differential amplifier circuit. The second control unit is connected to the first sensor through the differential amplifier circuit, as shown in FIG. 8a.

FIG. 8b is a diagram of another connection relationship between a differential amplifier circuit and a first sensor according to this application. The differential amplifier circuit includes a first input end, a second input end, and a first output end. For the structure of the first sensor, refer to the foregoing related descriptions. Details are not described herein again. The first input end of the differential amplifier circuit is connected to the signal output end J15 of the first sensor. The second input end of the differential amplifier circuit is connected to the ground end J14 of the first sensor. The first output end of the differential amplifier circuit is connected to the second control unit. When voltages at the first input end and the second input end of the differential amplifier circuit are different, a voltage at the first output end changes. Based on this, the second opening information output by the first sensor may be obtained.

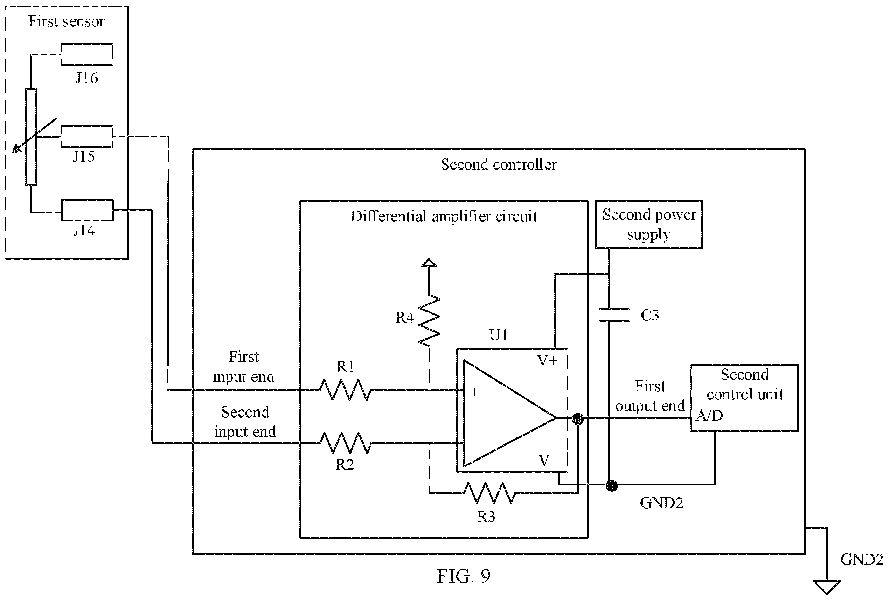

FIG. 9 is a diagram of another connection relationship between a differential amplifier circuit and a first sensor according to this application. In this example, the differential amplifier circuit includes a first resistor R1, a second resistor R2, a third resistor R3, a fourth resistor R4, and a first operational amplifier U1. The first operational amplifier U1 includes a positive electrode (+), a negative electrode (-), and an output end (out). The first resistor is connected between the signal output end of the first sensor and the positive electrode of the first operational amplifier. The second resistor is connected between the ground end of the first sensor and the negative electrode of the first operational amplifier. The third resistor is bridged between the negative electrode of the first operational amplifier and the output end of the first operational amplifier. The fourth resistor is connected between the positive electrode of the first operational amplifier and the ground end of the second controller. A structure of the differential amplifier circuit is simple. In addition, the first input end of the differential amplifier circuit is connected to the signal output end of the first sensor, and the second input end of the differential amplifier circuit is connected to the ground end of the first sensor. Therefore, the second opening information that is of the accelerator pedal and that is detected by the first sensor can be obtained by using a signal output by the first output end of the differential amplifier circuit. The signal output by the first output end of the differential amplifier circuit depends on a voltage difference between the first input end and the second input end of the differential amplifier circuit, and is irrelevant to the ground end of the second controller. Therefore, impact, on acquired first opening information and second opening information, of a dynamic terrain difference between the GND_1 and the GND_2 can be eliminated based on the differential amplifier circuit.

Further, optionally, the first operational amplifier U1 further includes two pins, which may be represented as V+ and V-. With reference to FIG. 9, the pin V+ is configured to connect to a second power supply included in the second controller, and the pin V- is connected to the ground, to supply power to the differential amplifier circuit. The second power supply may be, for example, a local power supply V_{DD} of the second controller, or may also be a second LDO. It should be noted that names of pins (or referred to as ports or stitches) included in the first operational amplifier are merely examples. For example, a bipolar junction transistor (bipolar junction transistor, BJT) is used in the first operational amplifier, and the second power supply corresponds to a collector (Vcc) and an emitter (Vee) of the BJT. For another example, a field effect transistor (field effect transistor, FET) is used in the first operational amplifier, and the second power supply corresponds to a drain (Vdd) and a source (Vss) of the FET.

For example, R1 = R2 = R3 = R4 = 10 kiloohms (kΩ), and C3 = 0.1 microfarad (uF).

In a possible implementation, the second controller may further include a voltage follower. An output voltage of the voltage follower is the same as an input voltage, and the voltage follower has features of high input impedance (for example, several megaohms) and low output impedance (for example, several ohms). Therefore, the voltage follower may play a buffering and isolation role for the first sensor, thereby helping improve a capability of the first sensor to carry a load. Specifically, the differential amplifier circuit is connected to the first sensor through the voltage follower.

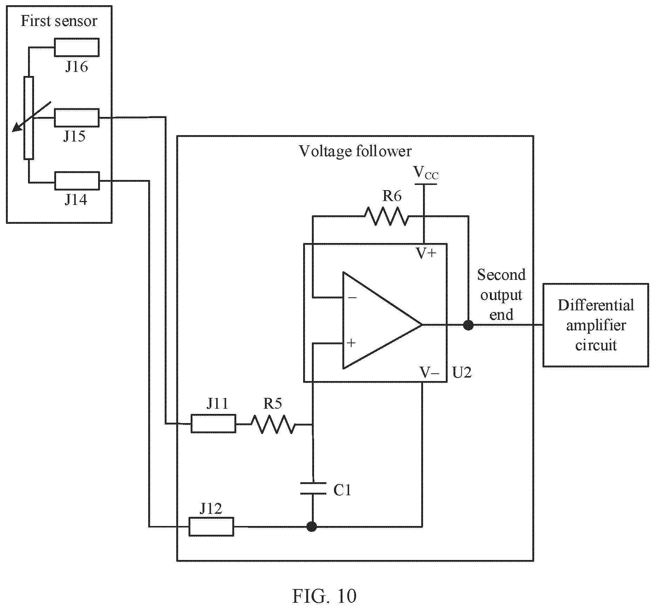

FIG. 10 is a diagram of a connection relationship between a voltage follower, a differential amplifier circuit, and a first sensor according to this application. The voltage follower includes a second output end, a second operational amplifier U2, a fifth resistor R5, a sixth resistor R6, and a first capacitor C2. The fifth resistor R5 and the first capacitor C2 form an RC circuit. The second output end of the voltage follower is connected to the differential amplifier circuit. The fifth resistor is connected between the signal output end J15 of the first sensor and a positive electrode of the second operational amplifier. The sixth resistor is bridged between a negative electrode and a second output end of the second operational amplifier. The first capacitor is connected between the ground end J14 of the first sensor and the positive electrode of the second operational amplifier. The RC circuit is configured to filter out interference of a high level signal caused by a cable between the first sensor and the differential amplifier circuit. It may also be understood that the voltage follower provides at least two ports for the first sensor, which are a port J11 and a port J12, respectively. The port J11 of the voltage follower is used to connect to the signal output end J15 of the first sensor. The port J12 of the voltage follower is used to connect to the ground end J14 of the first sensor.

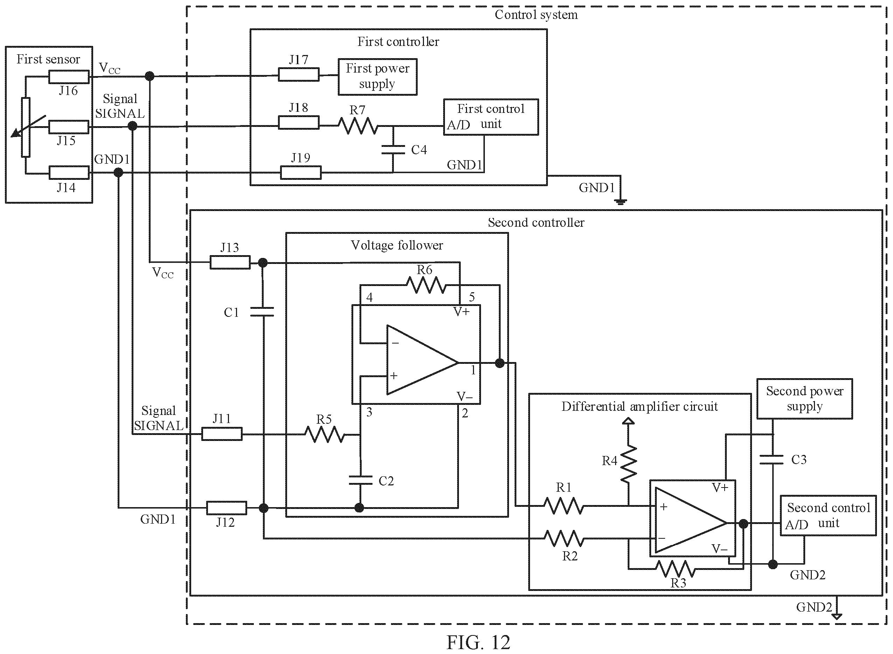

Further, optionally, the second operational amplifier U2 further includes two pins, which may be represented as V+ and V-. The pin V+ is configured to connect to the first power supply included in the first controller (referring to FIG. 12 below), and the pin V- is connected to the port J12 of the voltage follower, so that the first power supply of the first controller supplies power to the voltage follower.

For example, R5 = 20 kΩ, R6 = 10 kΩ, and C1 = 10 uF.

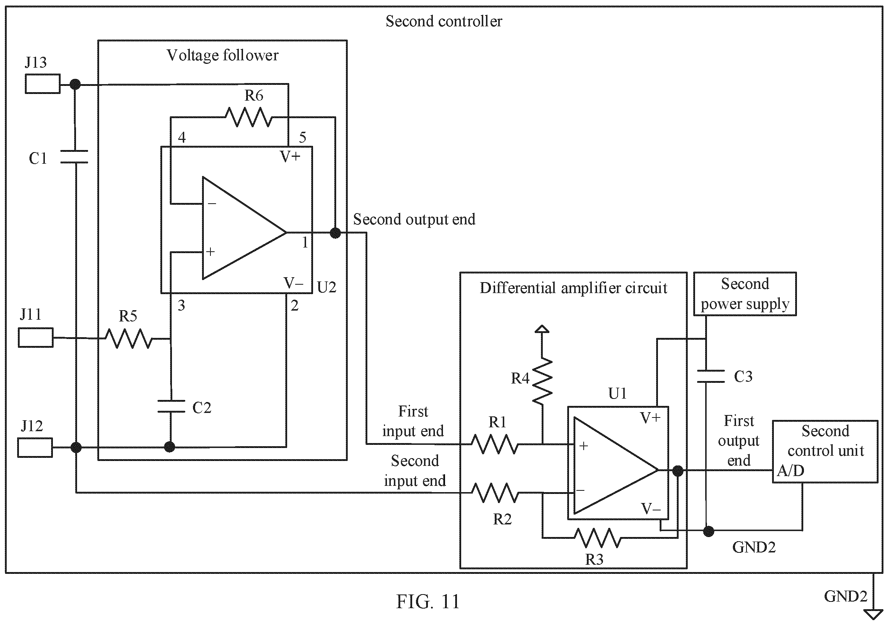

FIG. 11 is a diagram of a structure of a second controller according to this application. The second controller includes the voltage follower, the differential amplifier circuit, the second control unit, and the second power supply. The port J11 of the voltage follower is configured to connect to the signal output end J15 of the first sensor. The port J12 of the voltage follower is configured to connect to the ground end J14 of the first sensor. The port J13 of the voltage follower is configured to connect to the first power supply in the first controller, and the first power supply is configured to supply power to the voltage follower. The second output end of the voltage follower is connected to the first input end of the differential amplifier circuit. The second input end of the differential amplifier circuit is connected to the port J12 of the voltage follower. The first output end of the differential amplifier circuit is connected to the A/D of the second control unit. The second power supply included in the second controller supplies power to the differential amplifier circuit.

Based on the foregoing content, the following provides a specific implementation of the foregoing control system, to help further understand an architecture of the foregoing control system. It should be noted that, in the foregoing structures, if there is no special description or logical conflict, other possible control systems may be formed through combination according to an internal logical relationship of the structures.

FIG. 12 is a diagram of an architecture of another control system according to this application. The control system may include the first controller and the second controller. In this example, the first controller in FIG. 4 is used as an example, the second controller in FIG. 11 is used as an example, and the first sensor in FIG. 5a is used as an example. The potential of the ground end GND1 of the first controller is different from the potential of the ground end GND2 of the second controller. Therefore, the reference potential of the first controller is different from the reference potential of the second controller. It may also be understood that there is a terrain difference between the first controller and the second controller. The ground end of the first sensor is connected to the ground end of the first control unit, and the port J12 of the voltage follower is connected to the ground end of the first sensor. Therefore, the reference potential of the first sensor, the reference potential of the first controller, and the reference potential of the voltage follower are the same. Further, a potential of the second input end of the differential amplifier circuit is the same as the reference potential of the first sensor, a potential of the first input end of the differential amplifier circuit is the same as a potential of the signal output end of the first sensor, and the first output end of the differential amplifier circuit depends on a potential difference between the first input end and the second input end. Therefore, by using the differential amplifier circuit, a problem in which the opening information obtained from the first sensor by the first controller and the second controller is inaccurate due to the terrain difference between the first controller and the second controller can be resolved.

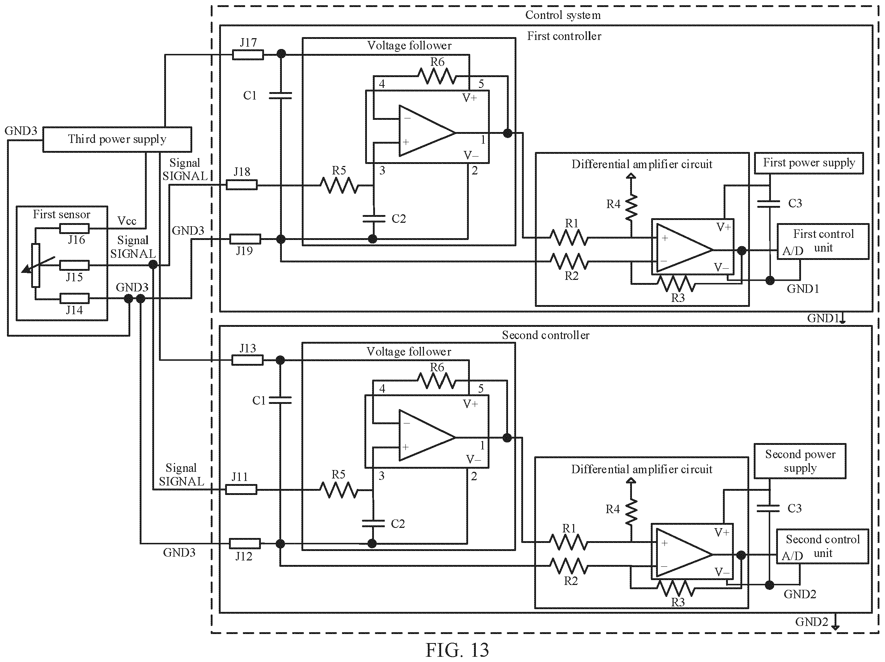

It should be noted that power may also be supplied to the first sensor by using a third power supply that is independent of the first controller and the second controller, as shown in FIG. 13. The third power supply may be, for example, a third LDO. For the third LDO, refer to the foregoing description of the first LDO. Details are not described herein again.

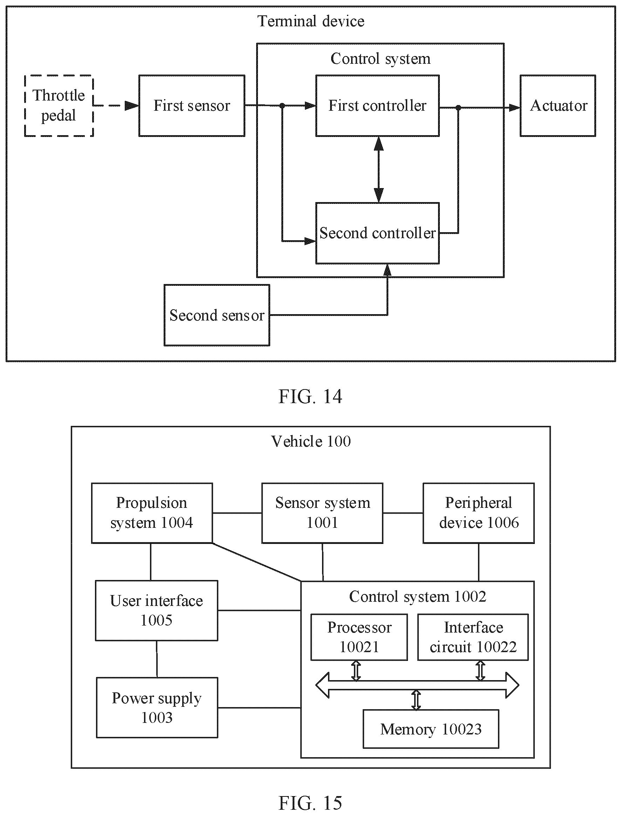

Based on the foregoing described architecture and function principles of the control system, this application may further provide a terminal device. The terminal device may include a first sensor and the control system in any one of the foregoing embodiments. Further, optionally, the terminal device may further include a second sensor, as shown in FIG. 14. For specific descriptions of the first sensor, the control system, and the second sensor, refer to the foregoing related descriptions. Details are not described herein again.

Further, optionally, the terminal device may further include a vehicle frame. The vehicle frame is configured to fasten the control system in any one of the foregoing embodiments. The ground end of the first controller is connected to the vehicle frame, and the ground end of the second controller is connected to the vehicle frame, to ground the first controller and the second controller.

It should be noted that the terminal device may further include another possible functional structure, for example, may further include an accelerator pedal or the like. This is not limited in this application.

For example, the terminal device may be, for example, a vehicle (for example, an uncrewed vehicle, a smart vehicle, an electric vehicle, or a digital vehicle), a robot, a surveying and mapping device, an uncrewed aerial vehicle, a smart home device (for example, a television, a robotic vacuum cleaner, a smart desk lamp, an acoustic system, a smart lighting system, an electrical apparatus control system, home background music, a home theater system, an intercom system, or a video surveillance device), a smart production device (for example, an industrial device), a smart transportation device (for example, an AGV, an uncrewed transport vehicle, or a truck), or a smart terminal (for example, a mobile phone, a computer, a tablet computer, a palmtop computer, a desktop computer, a headset, an acoustic device, a wearable device, a vehicle-mounted device, a virtual reality device, or an augmented reality device).

FIG. 15 shows an example in which a terminal device is a vehicle, and is an example of a functional block diagram of the vehicle according to this application. Components coupled to the vehicle 100 or included in the vehicle 100 may include a sensor system 1001 and a control system 1002. It may be understood that a vehicle function framework shown in FIG. 15 is merely an example. In another example, the vehicle 100 may include more, fewer, or different systems, and each system may include more, fewer, or different components. In addition, the shown systems and components may be combined or split in any manner. This is not specifically limited in this application. For example, the vehicle may further include a power supply 1003, a propulsion system 1004, a user interface 1005, and a peripheral device 1006. In some embodiments, the peripheral device 1006 provides a means for a user of the vehicle 100 to interact with the user interface 1005. For example, a touchscreen may provide information for the user of the vehicle 100, for example, may display a self-driving mode and a manual driving mode, so that a driver can select the mode. The user interface 1005 may further operate the touchscreen to receive an input of the user, for example, inputting or selecting the self-driving mode or the manual driving mode. In another case, the peripheral device 1006 may provide a means for the vehicle 100 to communicate with another device located in the vehicle. For example, a microphone may receive audio (for example, a voice command or another audio input) from the user of the vehicle 100. Likewise, a speaker may output audio to the user of the vehicle 100. The components of the vehicle 100 may be configured to work in a manner of interconnection with each other and/or interconnection with other components coupled to various systems. For example, the power supply 1003 may supply power to all the components of the vehicle 100. The control system 1002 may be configured to: receive data from the sensor system 1001 and the peripheral device 1006 and control the data.

The sensor system 1001 may include several sensors configured to sense information about an environment in which the vehicle 100 is located, and the like. For example, the sensor in the sensor system 1001 may include but is not limited to a millimeter wave radar and/or a lidar and/or a vision apparatus. For functions of the millimeter wave radar, the lidar, and the vision apparatus, refer to the foregoing related descriptions. Details are not described herein again. Further, the sensor system 1001 may further include a global positioning system (Global Positioning System, GPS), an inertia measurement unit (Inertial Measurement Unit, IMU), and a brake that is configured to modify a position and/or an orientation of the sensor. In some embodiments, the GPS may be any sensor configured to estimate a geographical location of the vehicle 100. Therefore, the GPS may include a transceiver that estimates the location of the vehicle 100 relative to the earth based on satellite positioning data. In some examples, the control system 1002 may use the GPS to estimate a road on which the vehicle 100 travels based on map data. The IMU may be configured to sense a location and a direction change of the vehicle 100 based on inertia acceleration and any combination thereof. In some examples, a combination of sensors in the IMU may include, for example, an accelerometer and a gyroscope. In addition, another combination of sensors in the IMU is also possible.

It may be understood that the sensor system 1001 may further include a sensor (for example, an in-vehicle air quality monitor, a fuel gauge, an engine oil thermometer, or an accelerator pedal position sensor) of an internal system of the monitored vehicle 100. Sensor data from one or more of these sensors can be used to detect an object and corresponding features (a position, a shape, a direction, a speed, and the like) of the object. Such detection and recognition are key functions for safe operation of the vehicle 100. The sensor system 1001 may further include another sensor. This is not specifically limited in this application.

Some or all the functions of the vehicle 100 are controlled by the control system 1002. The control system 1002 may include at least one processor 10021. Further, the control system 1002 may also include an interface circuit 10022. The processor 10021 executes instructions stored in a non-transient computer-readable medium, for example, a memory 10023. The control system 1002 may alternatively be a plurality of computing devices that control an individual component or a subsystem of the vehicle 100 in a distributed manner.

The processor 10021 may be a circuit that has a signal (or data) processing capability. In an implementation, the processor may be a circuit that has a capability of reading and running instructions, for example, a central processing unit (central processing unit, CPU), a microprocessor, a graphics processing unit (graphics processing unit, GPU) (may be understood as a microprocessor), a digital signal processor (digital signal processor, DSP), or the like. In another implementation, the processor may implement a specific function by using a logical relationship of a hardware circuit. The logical relationship of the hardware circuit is fixed or reconfigurable. For example, the processor is a hardware circuit implemented by using an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). For example, the processor may alternatively be an application processor (application processor, AP), an image signal processor (image signal processor, ISP), another programmable logic device, a transistor logic device, a hardware component, or any combination thereof.

The propulsion system 1004 may be configured to provide powered motion for the vehicle 100. The propulsion system 1004 may include an engine/engine, an energy source, a transmission apparatus (transmission), a wheel/tire, and the like. It may be understood that the propulsion system 1004 may additionally or alternatively include other possible components. This is not specifically limited in this application.

Although FIG. 15 functionally displays the processor, the memory, and another element of the control system 1002 in a same block, a person of ordinary skill in the art should understand that the processor and the memory may actually include a plurality of processors or memories that are not stored in a same physical housing. For example, the memory may be a hard disk drive or another storage medium located in a housing different from that of the control system 1002. For another example, the processor may alternatively be far away from the vehicle but may perform wireless communication with the vehicle.

In some embodiments, the memory 10023 may include instructions (for example, program logic), and the instructions may be read by the processor 10021 to perform various functions of the vehicle 100, including the functions described above. The memory 10023 may also include additional instructions, including instructions for sending data to, receiving data from, interacting with, and/or controlling one or more of the sensor system 1001, the control system 1002, and the peripheral device 1006. In addition to the instructions, the memory 10023 may further store data, for example, a road map, route information, data detected by a sensor, a location, a direction, a speed of a vehicle, other vehicle data, and other information. Such information may be used by the vehicle 100 and the control system 1002 in an autonomous mode, a semi-autonomous mode, and/or a manual mode of the vehicle 100.

The memory may be, for example, a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well known in the art. For example, a storage medium is coupled to a processor, so that the processor can read information from the storage medium and write information into the storage medium. In another example, the storage medium may alternatively be a component of the processor. The processor and the storage medium may be disposed in an ASIC. In addition, the ASIC may be located in the control system. Certainly, the processor and the storage medium may exist in the control system as discrete components.

The control system 1002 may control functions of the vehicle 100 based on inputs received from various subsystems (for example, the sensor system 1001) and from the user interface 1005. For example, the control system 1002 may use an input from the sensor system 1001 to control the vehicle to accelerate or decelerate to avoid an obstacle detected by an obstacle avoidance system. In some embodiments, the control system 1002 may operate to provide control over the vehicle 100 and the subsystems of the vehicle 100 in many aspects.

Optionally, one or more of the foregoing components may be separately installed from or associated with the vehicle 100. For example, the memory 10023 may be partially or completely separated from the vehicle 100. The foregoing components may be communicatively coupled together in a wired and/or wireless manner.

For example, the vehicle 100 may be a car, a truck, a motorcycle, a bus, a boat, an airplane, a helicopter, a mower, an entertainment vehicle, a playground vehicle, a construction device, a tram, a golf cart, a train, or a handcart. This is not limited in this application.

It should be noted that "connection" in this embodiment of this application may be a direct connection. Optionally, in another possible case, "connection" may not be a direct connection, but may be performed by using some elements. This is not limited in this embodiment of this application.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "uniformity" does not mean absolute uniformity, and a specific engineering error may be allowed. "Perpendicularity" does not mean absolute perpendicularity, and a specific engineering error may be allowed. "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. In text descriptions of this application, the character "/" generally indicates an "or" relationship between associated objects. In the formula of this application, the character "/" indicates a "division" relationship between associated objects. In addition, in this application, the word "example" is used to represent giving an example, an illustration, or a description. Any embodiment or design scheme described as an "example" in this application should not be explained as being more preferred or having more advantages than another embodiment or design scheme. Alternatively, this may be understood as that use of the word "example" is intended to present a concept in a specific manner, and does not constitute a limitation on this application.

It may be understood that various numbers in embodiments of this application are merely used for differentiation for ease of description, and are not used to limit the scope of embodiments of this application. Sequence numbers of the foregoing processes do not mean an execution sequence. The execution sequence of the processes should be determined based on functions and internal logic of the processes. The terms "first", "second", and the like are used to distinguish between similar objects without having to describe a specific order or sequence. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control system, comprising a first controller and a second controller, wherein the first controller is connected to a first sensor, and the second controller is connected to the first sensor;
the first controller is configured to obtain first opening information that is of an accelerator pedal and that is detected by the first sensor, wherein the first opening information is used by the first controller to determine a control signal; and
the first controller or the second controller is configured to send at least one control signal to an actuator, wherein the at least one control signal is used to control the actuator to perform corresponding processing.

2. The system according to claim 1, wherein the second controller comprises a differential amplifier circuit and a second control unit; and
the second control unit is connected to the first sensor through the differential amplifier circuit.

3. The system according to claim 2, wherein the first sensor comprises a signal output end and a ground end, and the differential amplifier circuit comprises a first input end, a second input end, and a first output end; and
the first input end of the differential amplifier circuit is connected to the signal output end of the first sensor, the second input end of the differential amplifier circuit is connected to the ground end of the first sensor, and the first output end of the differential amplifier circuit is connected to the second control unit.

4. The system according to claim 3, wherein the differential amplifier circuit comprises a first resistor, a second resistor, a third resistor, a fourth resistor, and a first operational amplifier;
the first resistor is connected between the signal output end of the first sensor and a positive electrode of the first operational amplifier;
the second resistor is connected between the ground end of the first sensor and a negative electrode of the first operational amplifier;
the third resistor is bridged between the negative electrode of the first operational amplifier and an output end of the first operational amplifier; and
the fourth resistor is connected between the positive electrode of the first operational amplifier and a ground end of the second controller.

5. The system according to any one of claims 2 to 4, wherein the second controller further comprises a second power supply; and
the second power supply is configured to supply power to the differential amplifier circuit.

6. The system according to any one of claims 2 to 5, wherein the second controller further comprises a voltage follower; and
the differential amplifier circuit is connected to the first sensor through the voltage follower.

7. The system according to claim 6, wherein the voltage follower comprises a second output end, a second operational amplifier, a fifth resistor, a sixth resistor, and a first capacitor;
the second output end of the voltage follower is connected to the first input end of the differential amplifier circuit;
the fifth resistor is connected between the signal output end of the first sensor and a positive electrode of the second operational amplifier;
the sixth resistor is bridged between a negative electrode of the second operational amplifier and an output end of the second operational amplifier; and
the first capacitor is connected between the ground end of the first sensor and the positive electrode of the second operational amplifier.

8. The system according to claim 6 or 7, wherein the first controller is further configured to supply power to the voltage follower.

9. The system according to any one of claims 1 to 8, wherein the first controller comprises a first control unit; and
an analog-to-digital converter of the first control unit is connected to the signal output end of the first sensor; and
a ground end of the first control unit is connected to the ground end of the first sensor.

10. The system according to any one of claims 1 to 9, wherein that the first controller or the second controller is configured to send at least one control signal to an actuator comprises:
the second controller is configured to: receive a second indication signal from the first controller; or when a heartbeat signal of the first controller is not received within preset duration, obtain a second control signal based on second opening information that is of the accelerator pedal and that is detected by the first sensor, and send the second control signal to the actuator, wherein
the second indication signal indicates that at least one function of the first controller fails.

11. The system according to claim 10, wherein the first controller is further configured to supply power to the first sensor, and the at least one failed function does not comprise a power supplying function; or
the first controller is not configured to supply power to the first sensor.

12. The system according to claim 11, wherein the first controller comprises a first power supply; and
the first power supply is configured to supply power to the first sensor.

13. The system according to any one of claims 1 to 9, wherein the at least one control signal comprises a first control signal; and
that the first controller or the second controller is configured to send at least one control signal to an actuator comprises:
the first controller is configured to: obtain the first control signal based on the first opening information detected by the first sensor; and send the first control signal to the actuator.

14. The system according to any one of claims 1 to 9, wherein that the first controller or the second controller is configured to send at least one control signal to an actuator comprises:
the second controller is further configured to: obtain second opening information that is of the accelerator pedal and that is detected by the first sensor; determine second data based on the second opening information; and send the second data to the first controller; and
the first controller is further configured to: determine first data based on the first opening information obtained from the first sensor; and if the first data is consistent with the second data, obtain a first control signal based on the first opening information, and send the first control signal to the actuator.

15. The system according to claim 1, wherein the at least one control signal comprises a third control signal, and the second controller is further connected to a second sensor; and
that the first controller or the second controller is configured to send at least one control signal to an actuator comprises:
the second controller is configured to: obtain surrounding environment information detected by the second sensor; obtain the third control signal based on the surrounding environment information; and send the third control signal to the actuator.

16. The system according to claim 1 or 15, wherein the second controller is further connected to the second sensor, and the at least one control signal comprises a fourth control signal; and
that the first controller or the second controller is configured to send at least one control signal to an actuator comprises:
the second controller is further configured to: determine that the second sensor fails, obtain the fourth control signal based on second opening information that is of the accelerator pedal and that is detected by the first sensor, and send the fourth control signal to the actuator.

17. A terminal device, comprising the first sensor and the control system according to any one of claims 1 to 16, wherein
the first sensor is configured to detect the first opening information of the accelerator pedal.

18. The device according to claim 17, wherein the terminal device further comprises a second sensor; and
the second sensor is configured to detect surrounding environment information.

19. The device according to claim 17 or 18, wherein the terminal device further comprises a vehicle frame, and the control system is fastened to the vehicle frame.
